# EUROPÄISCHE PATENTANMELDUNG

(11) **EP 1 233 495 A1**
(43) Veröffentlichungstag der Anmeldung: **21.08.2002**
(21) Anmeldenummer: 02002466.7
(22) Anmeldetag: 01.02.2002
(51) Int. Cl.: H02B 1/04

(54) **Elektrisches Schaltgerät**

(30) Priorität: 15.02.2001 DE 20102689 U
(71) Anmelder: SIEMENS AKTIENGESELLSCHAFT, 80333 München (DE)
(72) Erfinder: Bollinger, Georg, 92431 Neunburg (DE); Jung, Robert, 92245 Kümmersbruck (DE)

(57) **Zusammenfassung**

Erfindungsgemäß wird ein elektrisches Schaltgerät (1) geschaffen, das bei erschwert zugänglichen Befestigungslöchern (4) eine Schraubbefestigung auf einfache Weise ermöglicht. Hierzu werden die Befestigungslöcher (4) mit einer Kontur (5) versehen, in die Schraubadapter (2) unter Formschluss in verschiedenen Winkelpositionen einsetzbar sind, so dass das Schaltgerät (1) über Befestigungslöcher (7) in den Schraubadaptern (2) befestigbar ist.

## Beschreibung

Die Erfindung betrifft ein elektrisches Schaltgerät mit einem Gehäuseboden, der mit ersten Befestigungslöchern versehen ist.

Elektrische Schaltgeräte der oben genannten Art sind am Markt erhältlich. Die für die Montage der Schaltgeräte vorgesehenen Befestigungslöcher sind mitunter nur erschwert zugänglich, z.B. wegen darüber liegender Ausbuchtungen am Gehäuse des Schaltgeräts, oder sie sind in Bezug auf eine kompakte Montage mit Minimalabständen zu anderen Geräten für die Befestigung ungeeignet.

Daher liegt der Erfindung die Aufgabe zugrunde, elektrische Schaltgeräte der oben genannten Art dahingehend zu verbessern, dass unter den oben genannten erschwerenden Bedingungen eine einfache Montage möglich ist.

Die Aufgabe wird dadurch gelöst, dass die ersten Befestigungslöcher jeweils mit einer Kontur versehen sind und zur Aufnahme von Schraubadaptern dienen, die mindestens ein zweites Befestigungsloch und einen Vorsprung aufweisen, der an die Kontur der ersten Befestigungslöcher angepasst ist und einen formschlüssigen Eingriff in mindestens zwei unterschiedlichen Winkelpositionen in Bezug auf die ersten Befestigungslöcher ermöglicht.

Weitere vorteilhafte Ausführungsformen sind den Unteransprüchen zu entnehmen.

Ein Ausführungsbeispiel der Erfindung wird im folgenden anhand einer Zeichnung näher erläutert.

Es zeigen:
- FIG 1, 2: ein erfindungsgemäßes Schaltgerät mit einem nichtmontierten Schraubadapter
- FIG 3, 4, 5: das Schaltgerät gemäß FIG 1, 2 mit einem in Eingriff stehenden Schraubadapter.

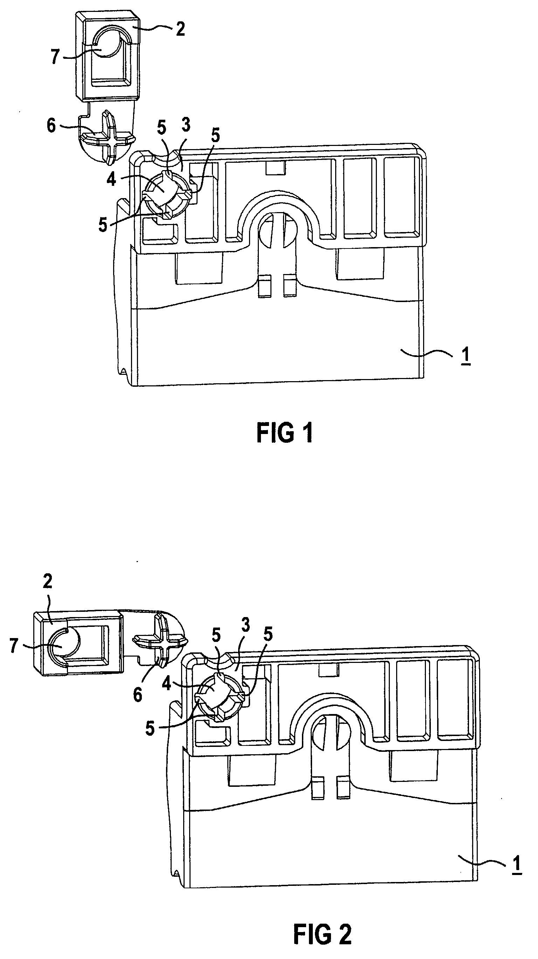

FIG 1, 2 zeigen ein erfindungsgemäßes Schaltgerät 1 mit jeweils einem Schraubadapter 2 im nichtmontierten Zustand, wobei die Lage der gesondert dargestellten Schraubadapter 2 um einen Winkel von 90° gegeneinander verdreht sind.

Die elektrischen Schaltgeräte 1 weisen einen Gehäuseboden 3 mit Befestigungslöchern 4 auf, die jeweils an der Lochinnenwand mit Einschnitten 5 versehen sind.

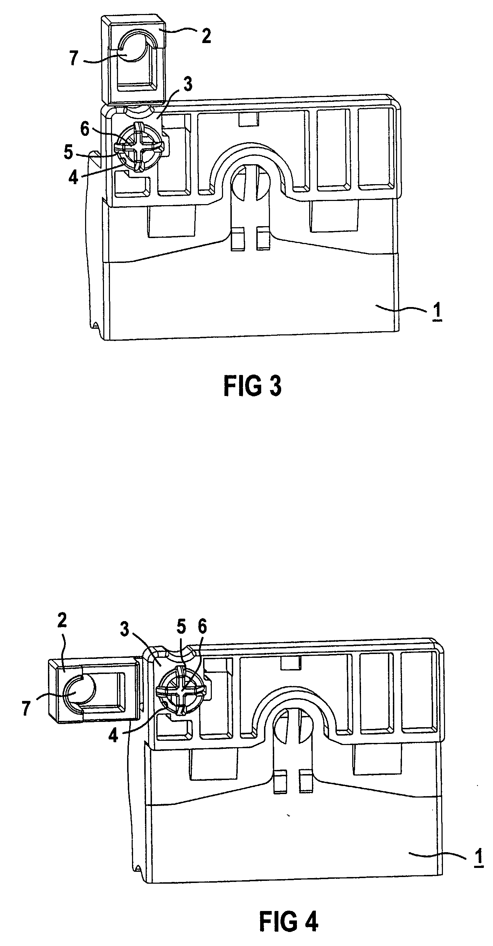

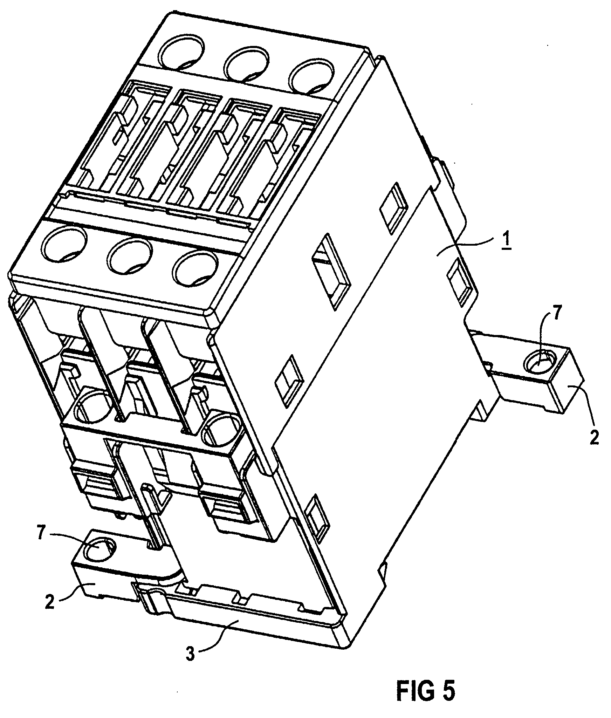

Diese haben im vorliegenden Ausführungsbeispiel einen definierten Winkelabstand von 90°. Die derart mit einer Kontur ausgebildeten Befestigungslöcher dienen zur Aufnahme der Schraubadapter 2, die einen an die Einschnitte 5 angepassten Vorsprung 6 in Form von vier Stegen aufweisen und einen formschlüssigen Eingriff in zwei unterschiedlichen Winkelpositionen ermöglichen wie in FIG 3, 4 und 5 dargestellt. Hierdurch lassen sich mit weiteren Befestigungslöchern 7 in den Schraubadaptern 2 in der Lage unterschiedliche Befestigungspunkte erreichen, was eine Befestigung der Schaltgeräte 1 auch unter den eingangs genannten erschwerten Bedingungen ermöglichst.

## Patentansprüche

1. Elektrisches Schaltgerät (1) mit einem Gehäuseboden (3), der mit ersten Befestigungslöchern (4) versehen ist,
**dadurch gekennzeichnet, dass** die ersten Befestigungslöcher (4) jeweils mit einer Kontur (5) versehen sind und zur Aufnahme von Schraubadaptern (2) dienen, die mindestens ein zweites Befestigungsloch (7) und einen Vorsprung (6) aufweisen, der an die Kontur (5) der ersten Befestigungslöcher (4) angepasst ist und einen formschlüssigen Eingriff in mindestens zwei unterschiedlichen Winkelpositionen in Bezug auf die ersten Befestigungslöcher (4) ermöglicht.

2. Elektrisches Schaltgerät nach Anspruch 1, **dadurch gekennzeichnet, dass** die Kontur im Befestigungsloch (4) durch Einschnitte (5) an der Lochinnenwand gebildet ist, die in einem definierten Winkelabstand zueinander liegen.

3. Elektrisches Schaltgerät nach Anspruch 2, **dadurch gekennzeichnet, dass** der Winkelabstand der Einschnitte (5) 90° beträgt.
